(19) **Europäisches Patentamt / European Patent Office / Office européen des brevets**

(11) **EP 1 443 408 B1**

(12) **EUROPEAN PATENT SPECIFICATION**

(45) Date of publication and mention
of the grant of the patent:
**21.11.2007 Bulletin 2007/47**

(51) Int Cl.:
*H04M 3/42* (2006.01)     *H04M 3/56* (2006.01)
*H04L 12/18* (2006.01)

(21) Application number: **02775350.8**

(22) Date of filing: **15.10.2002**

(86) International application number:
**PCT/JP2002/010644**

(87) International publication number:
**WO 2003/034234 (24.04.2003 Gazette 2003/17)**

(54) **COMMUNICATION SUPPORT METHOD, COMMUNICATION SERVER COMPRISING IT, AND COMMUNICATION SUPPORT SYSTEM**

KOMMUNIKATIONSUNTERSTÜTZUNGSVERFAHREN, KOMMUNIKATIONSSERVER DIESES UMFASSEND UND KOMMUNIKATIONSUNTERSTÜTZUNGSSYSTEM

PROCEDE DE SUPPORT DE COMMUNICATION, SERVEUR DE COMMUNICATION COMPRENANT CE PROCEDE ET SYSTEME SUPPORT DE COMMUNICATION

(84) Designated Contracting States:
**DE FR GB**

(30) Priority: **15.10.2001 JP 2001316548**
**01.10.2002 JP 2002288602**

(43) Date of publication of application:
**04.08.2004 Bulletin 2004/32**

(73) Proprietor: **MATSUSHITA ELECTRIC INDUSTRIAL CO., LTD**
**Kadoma-shi, Osaka 571-8501 (JP)**

(72) Inventors:
• **KINDO, Toshiki**
**Yokohama-shi, Kanagawa 227-0044 (JP)**
• **SHIDA, Takehiko**
**Yokohama-shi, Kanagawa 244-0813 (JP)**

• **OKA, Natsuki**
**Hirakata-shi,**
**Osaka 573-1193 (JP)**
• **ONIZUKA, Kentaro**
**Nara 631-0801 (JP)**

(74) Representative: **Holmes, Miles Keeton et al**
**Novagraaf International S.A.**
**25, avenue du Pailly**
**1220 Les Avanchets,**
**Geneva (CH)**

(56) References cited:
| | |
|---|---|
| WO-A-00/19344 | WO-A-00/72560 |
| WO-A-01/27771 | JP-A- 9 091 358 |
| JP-A- 9 101 991 | JP-A- 10 257 189 |
| JP-A- 2001 249 950 | US-A- 6 088 435 |

## Description

### Technical Field

The present invention relates to a communication support system used by a plurality of users through an information communication network that uses electrons, radio or light as a medium. More particularly, it relates to a communication support method that selects or recommends an appropriate counterpart in a conversation responsive to an interest of individual users, and a communication support system using the same method.

### Background Art

A communication support system has been known, e.g., as disclosed in Japanese Patent Unexamined Publication No. 2000-132509. Fig. 12 shows the conventional communication support system disclosed in this publication.

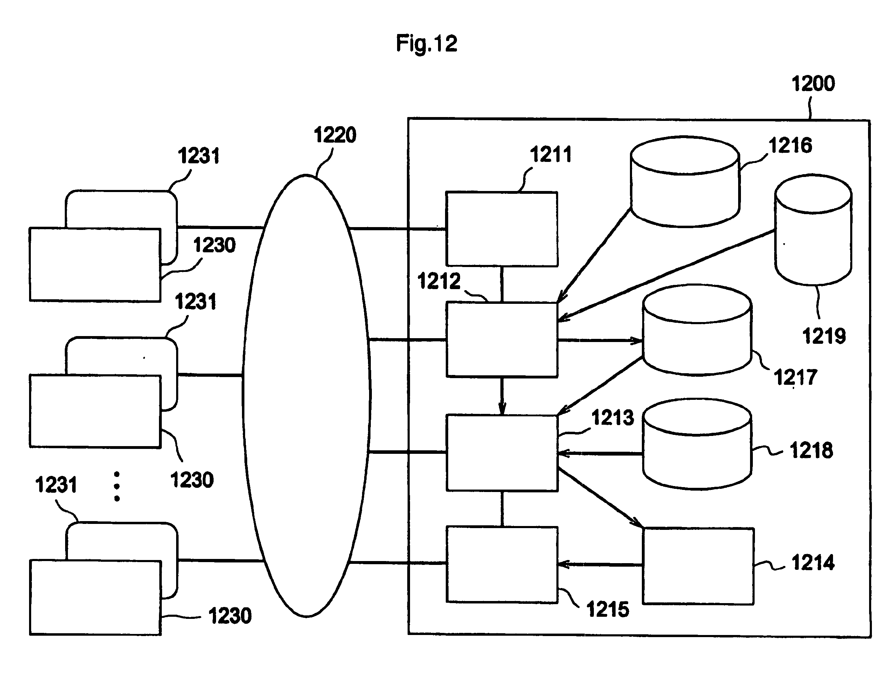

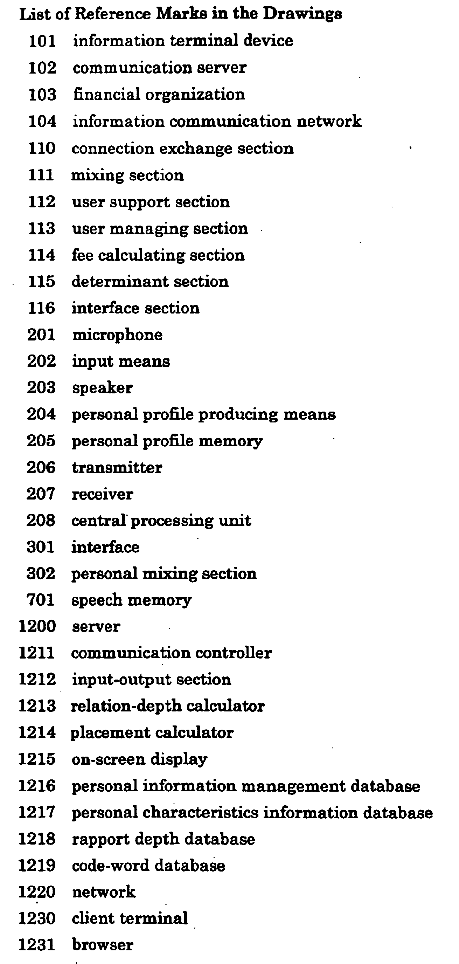

In Fig. 12, server 1200 comprises communication controller 1211, input-output section 1212, relation-depth calculator 1213, placement calculator 1214, on-screen display section 1215, personal information management database 1216, personal characteristics information database 1217, rapport depth database 1218, and code-word database 1219. Communication controller 1211 communicates with client terminal 1230 via network 1220. Input-output section 1212 shows a user via browser 1231 a keyword of personal information registered in code-word database 1219, and a selection value of the keyword or a prioritized keyword if registered in personal characteristics information database 1217. In the case of no registration of a selection value or a keyword prioritized in the database, or if the user wants to change them, the selection value related to the keyword input by the user or the priority order of this keyword is obtained as the characteristics of this user, and registered in personal characteristics information database 1217.
Relation-depth calculator 1213 calculates a relation depth between users' characteristics based on characteristics values about a plurality of users stored in personal characteristics information database 1217, and transfers the result to placement calculator 1214. In response to the relation depth between users' characteristics stored in rapport depth database 1218, placement calculator 1214 calculates a placement such that icons corresponding to closely related users are placed closely to each other on the screen, and transfers the result to the on-screen display section. On-screen display section 1215 displays the icons on the screen with browser 1231 based on the placement calculated by screen calculator 1214 for identifying the plurality of users.
A way of producing personal characteristics information is disclosed in Japanese Patent Unexamined Publication No. H09-288683, i.e., a personal file including personal interests is produced.
When a user want to find a counterpart from those whom the user is interested in and narrows down them to a particular one, the foregoing conventional structure, however, needs the following troublesome procedure: All the keywords registered and having high-degree of interest are reset to have low-degree of interest through input-output section 120, and then only the keywords targeted in this case are assigned high-degree of interest. Therefore, the conventional structure needs to change a targeted interest every instant in order to communicate with a counterpart, and it is difficult for the conventional method and system.
Reference may be made to US-A-6088435 which discloses the precharacterizing features of the present invention, and to WO 00/72560.

### Disclosure of the Invention

The present invention is defined in the claims.
An advantage of the present invention is that it can provide a communication support method and a communication support server, which can change an interesting target with ease and select an appropriate counterpart in response to the change of interest on real time basis.

Brief Description of the Drawings

Fig. 1 is a block diagram illustrating a communication support system in accordance with a first exemplary embodiment of the present invention.
Fig. 2 is a block diagram illustrating a functional structure of an information terminal device in accordance with the first exemplary embodiment of the present invention.
Fig. 3 is a wiring diagram of a communication server in accordance with the first exemplary embodiment of the present invention.
Fig. 4A shows a data structure of a personal profile in accordance with the first exemplary embodiment of the present invention.

Fig. 4B shows a data structure of a content profile in accordance with the first exemplary embodiment of the present invention.

Fig. 5 is a flowchart illustrating an operation of the communication support system in accordance with the first exemplary embodiment of the present invention.

Fig. 6A shows a depth of interest indicated by a personal profile of user I in accordance with the first exemplary embodiment of the present invention.

Fig. 6B shows a depth of interest indicated by a personal profile of user J in accordance with the first exemplary embodiment of the present invention.

Fig. 7 is a block diagram illustrating a communication support system in accordance with a second exemplary embodiment of the present invention.

Fig. 8 is a wiring diagram of a communication server in accordance with the second exemplary embodiment of the present invention.

Fig. 9 is a flowchart illustrating an operation of the communication support system in accordance with the second exemplary embodiment of the present invention.

Fig. 10 shows a thread structure in accordance with the second exemplary embodiment of the present invention.

Fig. 11A shows an interface displayed on a screen of an information terminal device in accordance with the second exemplary embodiment of the present invention.

Fig. 11B shows another interface displayed on a screen of an information terminal device in accordance with the second exemplary embodiment of the present invention.

Fig. 12 is a block diagram of a conventional communication support system.

Preferred Embodiments of the Invention

Exemplary embodiments of the communication support system of the present invention are demonstrated hereinafter with reference to the accompanying drawings.

Exemplary Embodiment 1

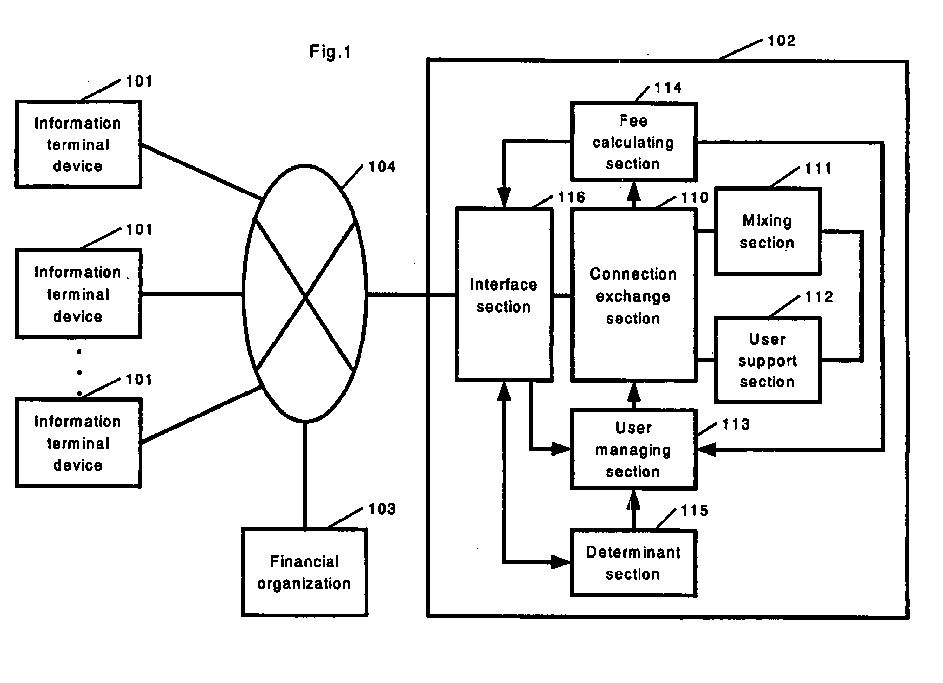

Fig. 1 is a block diagram illustrating a communication support system in accordance with the first exemplary embodiment. The communication support system comprises a plurality of information terminal devices 101, communication server 102, and financial organization 103. Those elements are coupled to information communication network 104.

Information terminal device 101 is, e.g., a personal computer or a cellular phone used by a user, and is installed with a browse such as the Internet Browse, so that device 101 can access communication server 102 through information communication network 104.

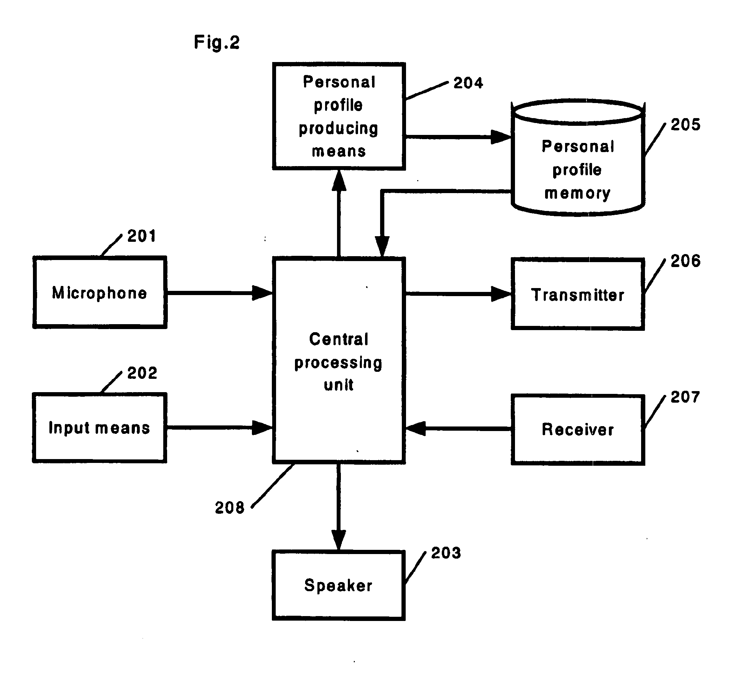

Fig. 2 is a block diagram illustrating a functional structure of information terminal device 101, which comprises the following elements:

microphone 201 through which a user inputs voices;
input means 202 through which a user inputs his or her taste upon necessary;
speaker 203, i.e., output means, for outputting a signal supplied from communication server 102;
personal-profile producing means 204 for detecting an interest from information input by a user through input means 202, and producing a personal profile;
personal-profile memory 205 for storing a personal profile;
transmitter 206 for transmitting the personal profile and the voices supplied from microphone 201 to communication server 102;
receiver 207 for receiving voice data and information data supplied from server 102; and
central processing unit (CPU) 208 for controlling overall information terminal device 101.

In the preferred embodiments, personal-profile producing means 204 can update a personal-profile with a content-profile, detailed later, obtained from an output from personal mixing section 302, i.e., the output is a conversation obtained from personal mixing section 302.

The personal profile refers to depths about interests and tastes prepared by a user with regard to personal information and a plurality of keywords given to the information received from server 102. The personal information includes a user ID, full name, age, telephone number, address, and e-mail address.

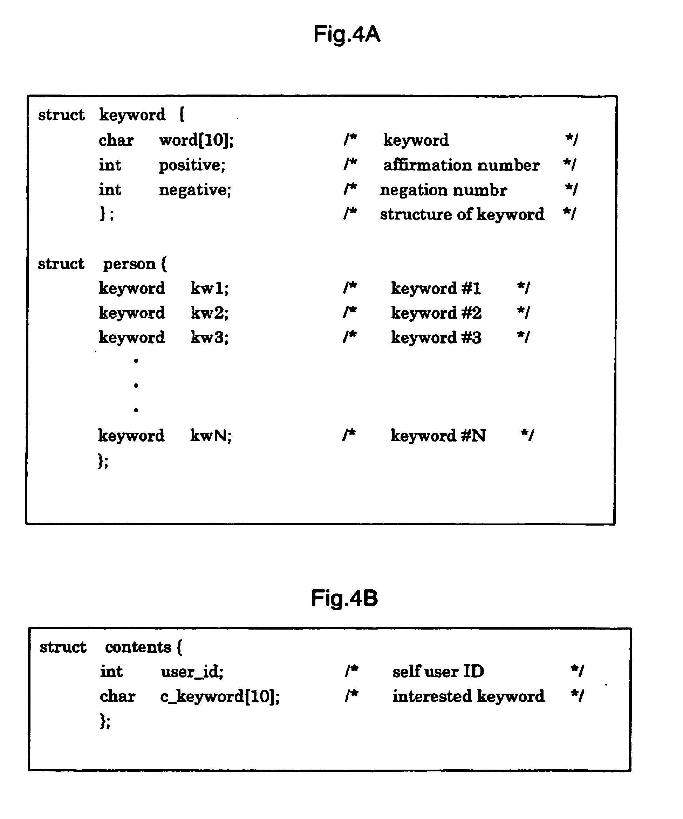

Fig. 4A shows a data structure of a personal profile. In Fig. 4A, the positive of the keyword takes a greater value as an importance of the interest targeted by the keyword becomes higher, i.e., an interest becomes deeper, and takes a smaller value as the importance becomes lower. The negative of the keyword takes a greater value as the importance of the interest targeted by the keyword becomes lower. Personal profile producing means 204 updates the number of affirmation and the number of negation about respective keywords with an input through input means 202. This procedure is detailed later.

Communication server 102 comprises the following elements:

interface section 116 for receiving an access from user's information terminal device 101;
connection exchange section 110 for changing a connection among respective functional sections within the system in response to an access request from a user;
mixing section 111 for synthesizing messages, formed of voices or sentences input to server 102, in response to an interest of individual users, and outputting the synthesized message;
user support section 112 for teaching how to use the system to a user who accesses server 102 for the first time;
user managing section 113 for deciding whether or not to permit a user to access;
fee calculating section 114 for calculating a fee of communication server 102; and
determinant section 115 for settlement of receipt and adjustment of the fee.

The structure discussed above can be formed by a calculating system or a computer.

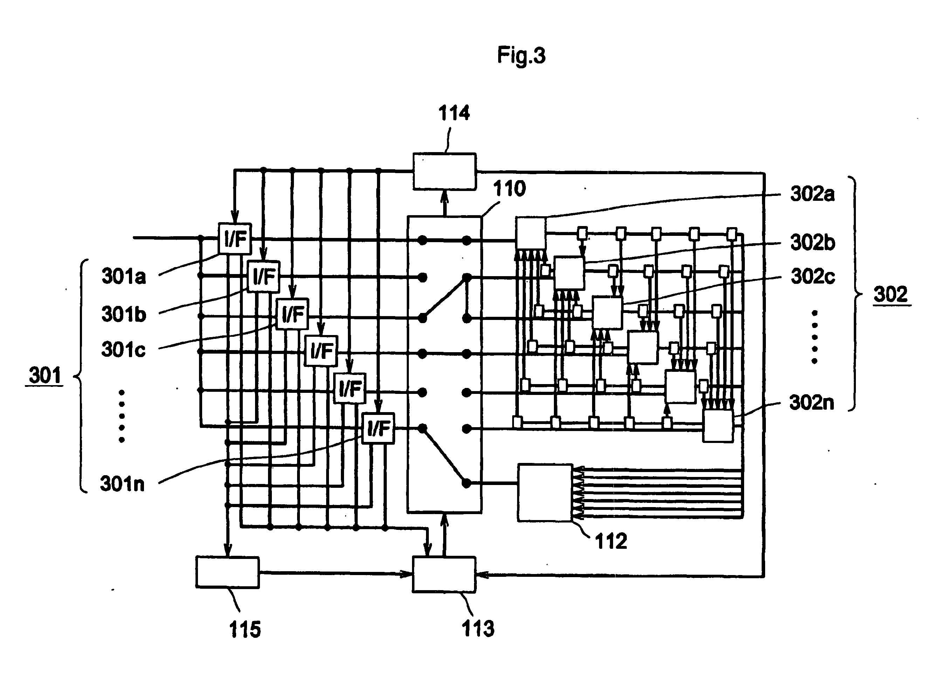

Fig. 3 is a wiring diagram of respective elements of communication server 102. Interface section 116 and mixing section 111 are an aggregate of interfaces 301 and an aggregate of personal mixing sections 302 respectively. Server 102 can receive accesses from the number of users corresponding to the number of interfaces 301 or personal mixing sections 302. Personal mixing sections 302 are coupled to each other in a matrix form, and one personal mixing section 302 can receive the outputs from all the other personal mixing sections 302. Respective outputs of all the personal mixing sections 302 can be coupled to any interface 301 by connection exchange section 110.

Interface 301 (in the Figs, interface is referred to as I/F) is an interface device between a user and server 102 for receiving an access from the user who wants to have a conversation with another user sharing the same interest, or an interface device between server 102 and information communication network 104 to which server 102 outputs data.

Connection exchange section 110 includes a communication exchange function that couples interface 301 to personal mixing section 302. In the preferred embodiments, connection exchange section 110 controls a connection following an instruction from user managing section 113 and in response to a payment record of a user.

Each one of personal mixing section 302 (in this first embodiment, e.g., in Fig. 3, from the upper left to the lower right, the sections are denoted 302a, 302b, 302c, ....., 302n) is connected to connection exchange section 110, and on the other hand, e.g., one personal mixing section 302a can be coupled to all the other personal mixing sections (302b, 302c,......., 302n). Personal mixing section 302a produces a content profile using a voice signal transmitted from interface 301a. A preferable content-profile is formed of a character-string (keyword) extracted from voice signals received in a given time. This keyword is searched from the same keyword-dictionary used for the personal profiles, so that it is preferable to install voice-recognition means in personal mixing section 302.

Fig. 4B shows a data structure of the content profile, where user's ID voiced is set at "user_id", and a keyword extracted from the voice signal is set at "c_keyword[10]". Personal mixing section 302 calculates a depth of similarity to a personal profile of another user sent from another personal mixing section 302 by using the content profile and the personal profile sent from interface 301. Personal mixing section 302 then mixes voice signals of the other user depending on the calculation.

User support section 112 teaches a user, who accesses server 102 for the first time, how to use the system. User managing section 113 determines whether or not to permit a user to access. In the preferred embodiments, user managing section 113 records and manages user's payment record and access record.

Fee calculating section 114 calculates an access time of a user based on a record stored in user managing section 113, and calculates a fee according to a given formula. Determinant section 115 charges the fee to financial organization 103 based on a payment execution command from a user. The foregoing elements constitute communication server 102.

Financial organization 103 is, e.g., a bank that makes settlement of the fee for communication services used by the users, and network 104 is, e.g., an information communication network using cable or radio. In the following description, a fee is charged depending on an access time used by a user; however, the fee can be charged in response to an information amount obtained by a user. Both of those charging systems are reasonable.

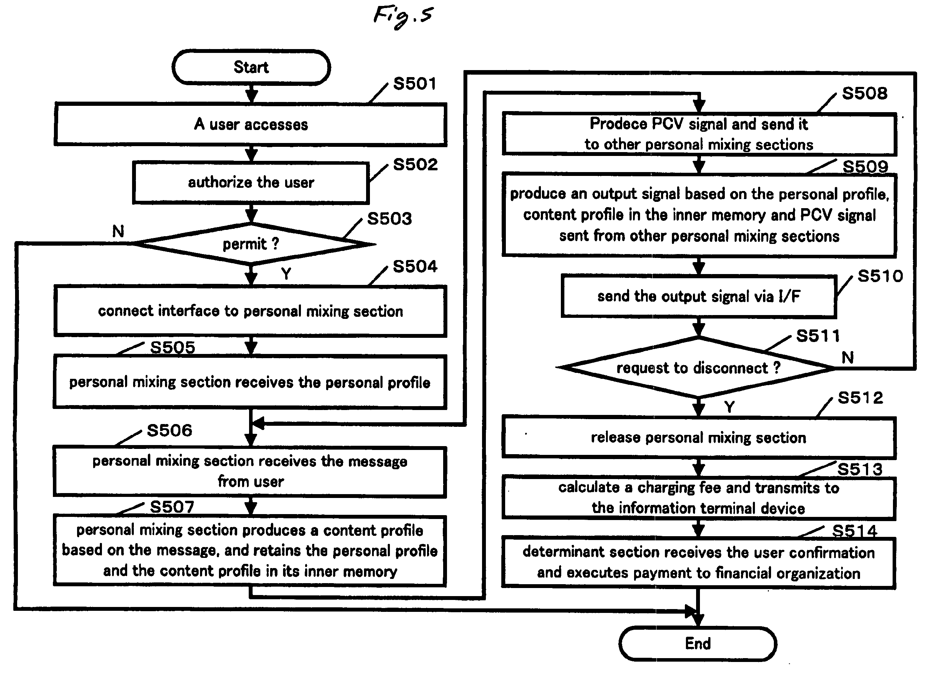

An operation of the communication support system discussed above is demonstrated hereinafter with reference to Fig. 5.

First, a user who wants to talk to a person sharing the same interest accesses interface 301 from information terminal device 101 via information communication network 104 (step S501.)

Interface 301 detects an access from the user and requests user managing section 113 to authorize the user (step S502.)

User managing section 113 determines whether or not to permit this access (step S503), and when the access is not permitted, the procedure is ended.

User managing section 113 records the time when the access is permitted, and sets connection exchange section 110 to connect interface 301 to personal mixing section 302 vacant as of this moment (step S504.)

In the case of the first time access of a user, the access is connected to user support section 112 so that necessary information can be provided to the user via information communication network 104. In the preferred embodiments, the user is asked about his or her interests through automatic voice response means. When the connection is established, a voice message of "connection is established" is preferably sent to information terminal device 101.

Next, when the access is permitted, information terminal device 101 transmits the personal profile including user's interest to personal mixing section 302 via interface 301 (step S505.)

Then the user inputs a topic he or she wants to discuss at present to microphone 201 of terminal device 101 with voice. Device 101 transmits this voice signal to personal mixing section 302 (step S506.) In the preferred embodiments, the personal profile retained in device 101 is automatically sent at the moment when a connection between device 101 and personal mixing section 302 is established. It is preferable to encourage the user to input a topic he or she wants to talk at present by assisting the user with a voice signal such as "what kind of party do you want to join?" sent from personal mixing section 302 and supplied to speaker 203.

Next, personal mixing section 302, which has received the personal profile and the voice signal, produces a content profile based on the voice signal, and retains the personal profile and the content profile in its inner memory (step S507.)

Personal mixing section 302 also transmits the personal profile, content profile and voice signal (the transmitted information including these three contents is referred to as PCV signal) to other personal mixing sections 302 (step S508.)

Then personal mixing section 302 calculates a depth of similarity between the personal profile and content profile stored in the inner memory and another personal profile and content profile sent from another personal mixing section 302 by using a given formula. Mixing section 302 then finds a weight related to the depth of similarity, and weights another voice signal transmitted from foregoing another personal mixing section 302, thereby synthesizing a plurality of messages for producing an output signal (step S509.)

The calculation of similarity depth and the synthesizing of messages by weighting are described hereinafter more specifically.

For instance, when personal mixing section 302j receives PCV(i) of PCV signal from personal mixing section 302i (i is not equal to j), section 302j calculates the depth of similarity between personal profile P(i), content profile C(i) in PCV(i) and personal profile P(j), content profile C(j) following the formula (1) shown below.

The preferred embodiments, using an information filtering function disclosed in Japanese Patent Unexamined Publication No. H09-288683 previously discussed, uses a keyword-dictionary, to be utilized by personal profiles, for converting a keyword into a vector. The personal profile is thus expressed in two matrixes, namely, affirmative matrix signal MY and negative matrix signal MN. The affirmative matrix signal expresses an affirmative depth about each one of keywords in an auto-correlation function, and the negative matrix signal expresses a negative depth about each one of keywords in an auto correlation function. The content profile is expressed in a first order vector "v" in which "1" is assigned to a keyword extracted from a voice and "0" is assigned to a keyword, not existed in the voice, of the personal profile.

A depth of similarity S (I, J) between two users (I and J) is calculated according to the following formula:

$$S(I,J) = \sum_{a} \sum_{x} D(a,x) \sum_{b} MY(J)[a][b]v(J)[b] \sum_{y} MY(I)[x][y]v(I)[y]$$

$$- \sum_{a} \sum_{x} D(a,x) \sum_{b} MN(J)[a][b]v(J)[b] \sum_{y} MN(I)[x][y]v(I)[y] \quad (1)$$

where D(a, x) is a matrix which becomes "1" when the keyword at "a"th of keyword dictionary of user J's personal profile is equal to the keyword at "x"th of keyword dictionary of user I's personal profile, and D(a, x) becomes "0" in other cases. S(I, J) takes a great positive value when the two users (I and J) share the same interest [MY(I) - MY(J), and MN(I) - MN (J)], and talk about the same topic [v(I) - v(J)]. If the two users have totally different interests from each other, S(I, J) ≒ 0, and when the two users have interests opposite to each other, S(I, J) takes a great negative value.

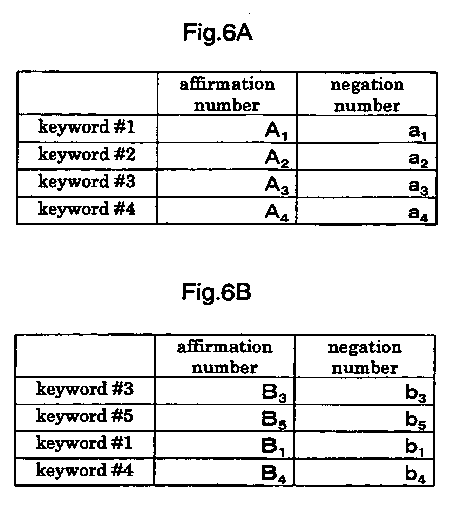

The foregoing calculation of the similarity depth is described more specifically with an embodiment shown in Fig. 6. Fig. 6A shows a depth of interest about each one of keywords set in the personal profile of user I, and greater number of affirmations indicates a deeper interest, and greater number of negations indicates a lighter interest.

$$\begin{pmatrix} A1 & 0 & 0 & 0 \\ 0 & A2 & 0 & 0 \\ 0 & 0 & A3 & 0 \\ 0 & 0 & 0 & A4 \end{pmatrix} \begin{pmatrix} 1 \\ 0 \\ 1 \\ 0 \end{pmatrix} = \begin{pmatrix} A1 \\ 0 \\ A3 \\ 0 \end{pmatrix} \qquad (2)$$

The above formula (2) indicates a matrix determinant calculating an affirmative depth of present interest based on the personal profile and the content profile of user I. The first term of the left side shows a matrix of auto-correlation function MY of the personal profile, and the second term shows a first order matrix of the content profile. The right side shows the result, which indicates only keyword 1 is valid among other keywords in which user I is interested.

Fig. 6B shows a depth of interest assigned to each one of keywords and indicated by a personal profile of user J. In the same manner as user J, the present interest depth of user J is calculated by formula (3).

$$\begin{pmatrix} B3 & 0 & 0 & 0 \\ 0 & B5 & 0 & 0 \\ 0 & 0 & B1 & \\ 0 & 0 & 0 & B4 \end{pmatrix} \begin{pmatrix} 1 \\ 0 \\ 0 \\ 0 \end{pmatrix} = \begin{pmatrix} B3 \\ 0 \\ 0 \\ 0 \end{pmatrix} \qquad (3)$$

However, as Figs. 6A and 6B clearly show, an arranged sequence of keywords is different depending on a user, and the difference is corrected to rearrange the keywords in the same sequence as that of user I, so that formula (4) is obtained.

$$\begin{pmatrix} B3 \\ 0 \\ 0 \\ 0 \end{pmatrix} \begin{pmatrix} 0 & 0 & 1 & 0 \\ 0 & 0 & 0 & 0 \\ 1 & 0 & 0 & 0 \\ 0 & 0 & 0 & 1 \end{pmatrix} = \begin{pmatrix} 0 \\ 0 \\ B3 \\ 0 \end{pmatrix} \qquad (4)$$

The affirmative interest-depth is calculated above, and the negative interest-depth will be calculated by the following matrix determinant:

$$\begin{pmatrix} a1 & 0 & 0 & 0 \\ 0 & a2 & 0 & 0 \\ 0 & 0 & a3 & 0 \\ 0 & 0 & 0 & a4 \end{pmatrix} \begin{pmatrix} 1 \\ 0 \\ 1 \\ 0 \end{pmatrix} = \begin{pmatrix} a1 \\ 0 \\ a3 \\ 0 \end{pmatrix} \qquad (5)$$

$$\begin{pmatrix} b3 & 0 & 0 & 0 \\ 0 & b5 & 0 & 0 \\ 0 & 0 & b1 & \\ 0 & 0 & 0 & b4 \end{pmatrix} \begin{pmatrix} 1 \\ 0 \\ 0 \\ 0 \end{pmatrix} = \begin{pmatrix} b3 \\ 0 \\ 0 \\ 0 \end{pmatrix} \qquad (6)$$

$$
\begin{pmatrix} b3 \\ 0 \\ 0 \\ 0 \end{pmatrix} \begin{pmatrix} 0 & 0 & 1 & 0 \\ 0 & 0 & 0 & 0 \\ 1 & 0 & 0 & 0 \\ 0 & 0 & 0 & 1 \end{pmatrix} = \begin{pmatrix} 0 \\ 0 \\ b3 \\ 0 \end{pmatrix} \qquad (7)
$$

Formula (5) indicates a negative present interest-depth of user I, formula (6) indicates a negative present interest-depth before the conversion of user J, and formula (7) indicates the same one but after the conversion. Those formulas are applied to formula (1), and formula (8) is obtained for calculating the similarity depth between user I and user J.

$$
\begin{pmatrix} 0 \\ 0 \\ B3 \\ 0 \end{pmatrix} \begin{pmatrix} A1 & 0 & A3 & 0 \end{pmatrix} - \begin{pmatrix} 0 \\ 0 \\ b3 \\ 0 \end{pmatrix} \begin{pmatrix} 0 & 0 & a3 & 0 \end{pmatrix} = A3 * B3 - a3 * b3 \qquad (8)
$$

As discussed above, an interest matching with a speech should be included in the personal profile for the calculation of the similarity depth between the speech of user I and the speech of user J, and the similarity depth can be changed with ease in response to a content of the speech.

The foregoing calculations are carried out for every user connected to server 102. The calculation of the similarity depth is not limited to the foregoing one, and another calculation method can be used as far as it satisfies the foregoing property.

Next, a weight is calculated for determining a method of synthesizing voice signals by using the foregoing similarity depth S(I, J). In the case of a positive similarity depth, an appropriate value is set in response to acoustic characteristics of the interface, and in the case of the similarity depth being equal to zero (0) or less than zero, zero (0) is set. To be more specific, W (I, J) = $\gamma$S(I, J), where $\gamma$ is preferably a parameter for determining a voice volume. According to the weight, for instance, voices set to have different sound volume from each other are produced, thereby synthesizing a plurality of messages (step S509.)

One of the preferred embodiments expresses a synthesized voice signal MV (I) in formula (9).

$$
MV(I) = \sum_{J} W(I,J) * V(J) \qquad (9)
$$

It is preferable to set the weight at zero (0) when the similarity depth calculated is not more than a given value, because this preparation can reduce noises.

A user ID is preferably assigned to one of the keywords included in a content profile. When a user wants to communicate with another user having a specific user ID, this preparation allows the similarity depth calculated by formula (1) to be deeper by setting a greater number of affirmations on importance degree of specific user's ID. On the contrary, when a greater number of negations is set on importance degree of specific user's ID, this preparation allows the similarity depth to be a negative value. The foregoing structure allows a user's ID to limit a conversation target.

Next, personal mixing section 302 transmits synthesized voice signal MV (I) and the content profile corresponding to this voice signal to information terminal device 101 (step S510.) Device 101 receives them and outputs the voice to the user through speaker 203.

The user is to hear a plurality of voices simultaneously, i.e., a voice at a large sound volume and a voice at a small sound volume. The voice close to the interest that the user spoke about sounds greater, and the voice not so close to the interest sounds weaker.

In the case that personal-file producing means 204 is equipped with the preferable information filtering function described in Japanese Patent Unexamined Publication No. H09-288683, when a user specifies a certain message (voice) and instructs inputting a speech of having an interest, e.g., "YES", through input means 202, a plurality of keywords included in the content-profile received together with the message (voice) are registered in this user's personal profile. If those keywords have been registered in the user's personal profile, the counter indicating the degree of importance with the number of affirmations is counted up. On the contrary, if the user instructs inputting a speech of having no interest, e.g., "NO", through input means 202, the number of negations, which indicates the importance degree of the plural keywords, is counted up.

If the user instructs inputting "delete keywords" through input means 202, a preferable structure deletes the keywords from the user's personal profile. This structure allows information terminal device 101 to add a keyword to a personal profile, or modify a value indicating an importance degree, by using input means 202 or a content-profile received.

Next, when a user disconnects the connection between information terminal device 101 and server 102 (step S511), device 101 sends a disconnect signal to interface 301, which then resets personal mixing section 302 engaged and releases it to another user (step S512.)

Interface 301 transmits a disconnect-time signal to fee calculating section 114, which then reads out the connection time stored in user managing section 113 for calculating an access time of the user with a predetermined formula. Fee calculating section 114 then informs user managing section 113 of a fee-charging signal and also transmits the signal to information terminal device 101 (step S513.)

The user confirms this fee-charging signal received by terminal device 101, and transmits the fee-charging signal together with an executing payment signal to determinant section 115 of server 102. When determinant section 115 receives those signals, it pays the fee from financial organization 103, and transmits a payment-over signal to user managing section 113 (step S514.)

The foregoing communication support system allows a user to hear a voice spoken by another user who talks about content at a deep similarity to the keyword spoken by the user. The other user's voice can be heard at the sound volume in response to the depth of similarity Therefore, even if the user changes a topic, the user can always keep conversation with other users who share the present topic spoken by the user. For instance, if the topic talked in a conversation group which the user joins starts deviating from the interest of the user, the weight (I, J) between the user and another user starts approaching zero (0). As a result, the user is advantageously away from the conversation group in due course. If a conversation group of which topic is closer to the user's interest is generated, the sound volume of the speech spoken therein becomes louder based on the same mechanism, so that the user advantageously feels that the user becomes closer to the group.

Individual users can get those advantages, and as a whole, plural conversation groups are generated or terminated dynamically such as in an atmosphere of a buffet party If a user speaks a sensible speech to two conversation groups, the two groups can be merged into one, or if a user speaks a senseless speech in a group, the group can be separated appropriately.

Further as described previously, when a user's ID is included in a content profile for specifying a counterpart, a user can speak to only this specified counterpart, or this preparation allows avoiding a conversation between two who are not in good congeniality with each other.

In the foregoing description, messages in voice are exchanged; however, a feature of the present invention is to change the transmission characteristics of information depending on how close the users have an interest to each other. In other words, easier transmissible characteristics for a closer interest is changed to harder transmissible characteristics for a weaker interest. Therefore, in the case of other modal such as text, a letter size instead of sound volume can be controlled with ease to obtain a similar advantage. For instance, a teleconferencing room using chat is the case. This teleconferencing room does not specify a topic but allows the participants to speak about any topic at any time. Thus when a user inputs a topic the user wants to talk about through an information terminal device in text, messages from other users are displayed on a screen of the information terminal device on a real time basis, and the messages are weighted by a size of letters similar to the synthesized voice signal output through the speaker. Even if the user changes a topic moment to moment, messages in text can be displayed similar to outputting voices.

Video signals can be sent together with voice signals and text data, so that a user can speak to another user by monitoring a video. A content profile can be produced in the information terminal device.

Exemplary Embodiment 2

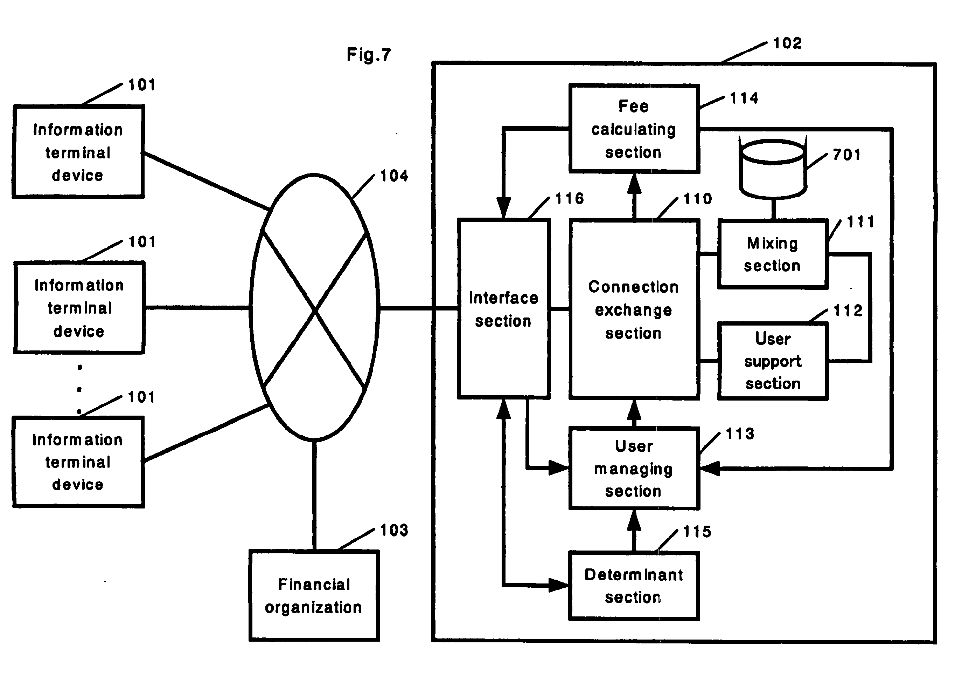

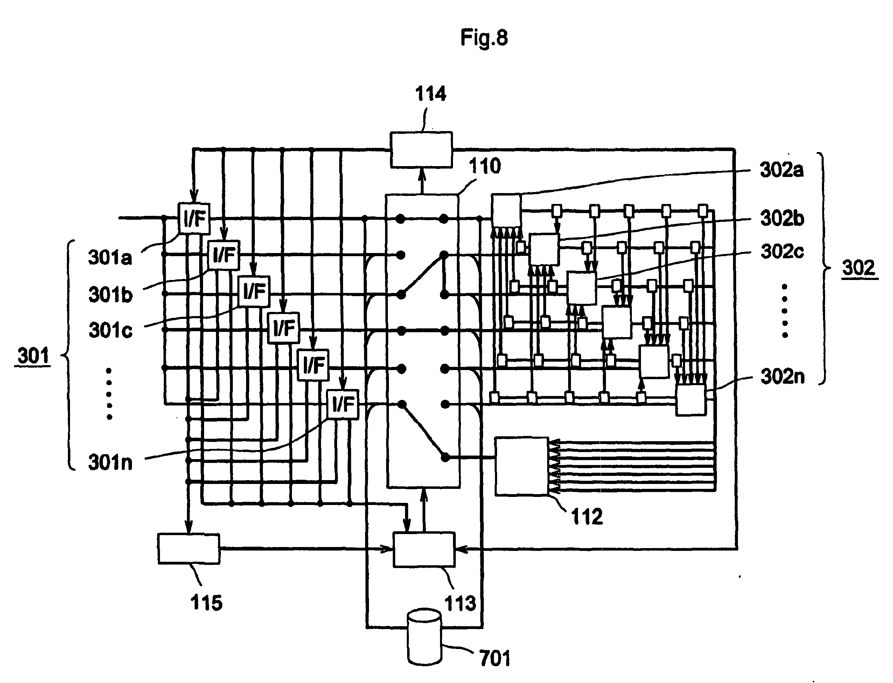

Fig. 7 is a block diagram illustrating a communication support system using text data in accordance with the second exemplary embodiment of the present invention. An electronic bulletin board is one of the examples of this embodiment. The communication support system using this bulletin board handles principally asynchronous communication, so that speech memory 701 for storing a user's speech and the electronic bulletin board for indicating a speech-history are included in the communication server besides the structure described in the first embodiment. As shown in Fig. 8, personal mixing section 302 reads out speeches spoken by users from speech-memory 701.

A minimum unit of a writing to the electronic bulletin board is a message, namely, a text written by an ordinary user. Plural messages in series are usually replied to a message. This series of messages is called a thread that is a practical unit of the electronic bulletin board.

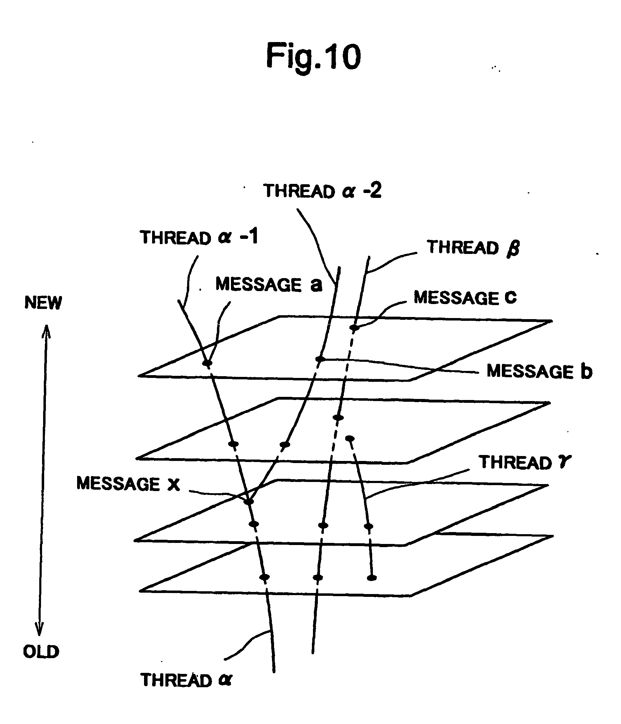

Fig. 10 shows a conceptual structure of the thread focusing on its content and an order of writings (it can be referred to as an amount of sequencing the messages in more general description.)

The amount of sequencing the messages can be defined by combining a writing sequence and times when the writings are done. In the case of focusing on the link between contents, the writing sequence is preferably to be used as the amount of sequencing the messages. In the case of focusing on full gear of a speech, the times are preferably used as the amount of sequencing messages. Each plane in Fig. 10 shows an extension of a content, and the writing sequence is shown in a plane. A thread is expressed with a line extending through the planes.

In Fig. 10, thread α, thread β which are split into two lines on the way, and thread γ which has a starting point and an endpoint, are shown. The split of thread is generated typically when a totally strange reply is addressed to a message "x'. In such a case, a message is newly attached to respective replies, so that a series of messages having different contents is produced. If a boring message is written, a short thread like thread γ having a starting point and an endpoint is produced. It is possible that the two threads merge into one.

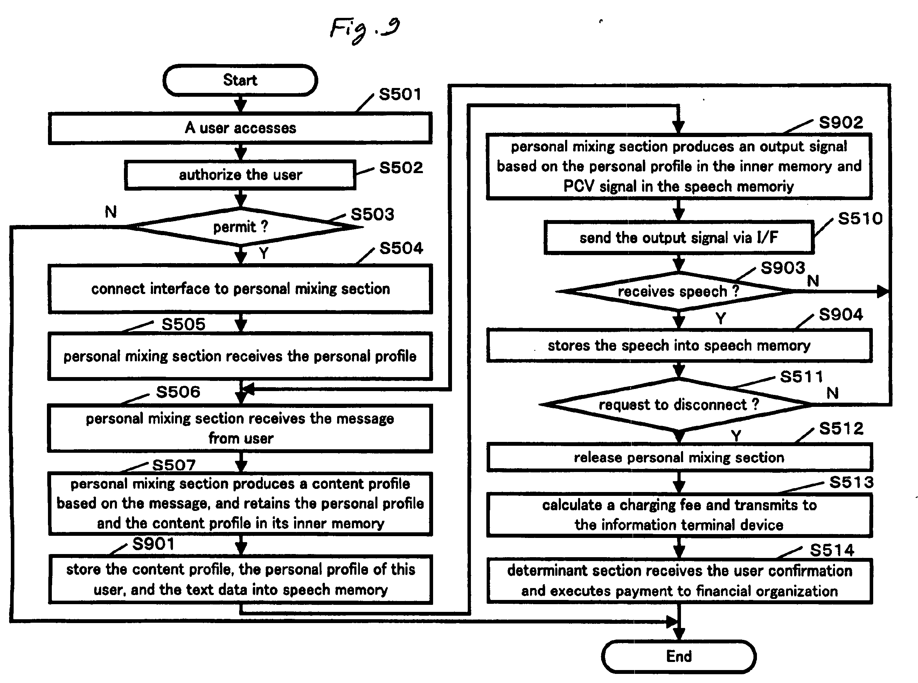

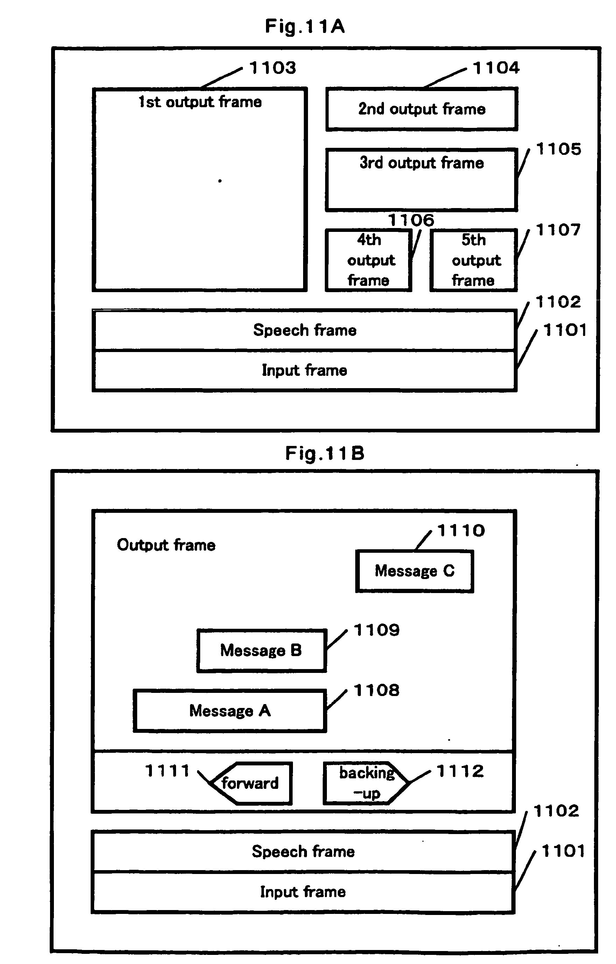

An operation of the second embodiment is demonstrated hereinafter with reference to Fig. 9 through Fig. 11. Figs. 11A and 11B show interface screens of information terminal device 101. In Fig. 11A, input frame 1101 is an area where a user inputs a topic he or she wants to speak or hear at present. Output frames 1103 through 1107 are areas where messages of deepest similarity supplied from other users are shown. Speech frame 1102 is an area where the user puts his or her speech or reply to the messages shown in output frames 1103 through 1107.

Fig. 9 shows a flowchart of a procedure taken by the communication support system in accordance with the second embodiment. First, a user accesses connection exchange section 110. The steps from this access until the connection to personal mixing section 302 are the same as the those of the first embodiment (step S301 through step S304.)

Next, when the access is permitted, the user selects input frame 1101 and inputs a topic through input means 202, i.e., a keyboard. The input is displayed in input frame 1101. Information terminal device 101 transmits this input text data together with a personal profile produced in advance to personal mixing section 302 (steps S305 and S306.)

Then personal mixing section 302 produces a content profile based on the text data received in the same manner as the first embodiment, and stores the content profile in an inner memory (step S307.)

Personal mixing section 302 then stores the content profile, the personal profile of this user, and the text data into speech memory 701 (step S901.) Memory 701 adds those data to threads, and links those data to other users' data or produces a new thread.

Personal mixing section 302 takes out a set of content-profile and personal-profile one by one from speech memory 701, and calculates a depth of similarity following the calculation method described in the first embodiment by using the content-profile and the personal-profile stored in the inner memory. This calculation is carried out on every set of content-profile and personal-profile stored in speech memory 701, then a given number of groups are produced in the order of deeper similarity Messages of the groups are extracted in the following manner.

First, the message of the deepest similarity is selected from the extracted messages, and if a message of second deepest similarity belongs to the same thread, select the message of later writing rather than earlier writing. If the message of second deepest similarity belongs to another thread, an order of writing the messages is focused, and the times of writing are disregarded. This procedure is repeated for the number of the selected messages. This method is preferable to a content-of-topic oriented case.

Next, personal mixing section 302 calculates weight "W" as discussed in the first embodiment, and synthesizes plural text-data weighted with a size of letters to be used for displaying messages (step S902.)

Personal mixing section 302 transmits a set of the text-data and the content-profile to information terminal device 101 (step S310.) Terminal device 101 receives those data and displays them in an output frame with a designated size of letter. To be more specific, the data is displayed in first output frame 1103 with the largest size of letter, and is displayed in second output frame 1104 with the second largest size of letter, and on ward, until in the fifth output frame 1107.

In this second embodiment, a size of letters is used as a weight; however, a color of letters, a typeface, and a density of letters can be used as a weight. In the case of density of letters, a message of the deepest similarity is expressed with the darkest density, and a lighter similarity is expressed with a lighter density. Those preparations allow a user to determine the depth of similarity through intuition.

As shown in Fig. 11B, plural messages 1108 through 1110 are preferably placed such that the distances between the messages are proportionate to the similarity of the contents. Further, when a user selects a message out of messages 1108 through 1110, and clicks forward button 1111 or backing-up button 1112, it is preferable that the procedure goes ahead or turns back along a thread. In such a case, a depth of similarity between the user and a user whose speech is selected along the thread is calculated based on the personal profile of this selected user and a content-profile found by the selected speech. If the depth of similarity results in a negative one, the speech is skipped. Therefore, if a speech does not match with the topic at clicking forward button 1111 or backing-up button 1112, the speech is not displayed.

If a user wants to speak or reply to a message displayed on an output frame, the user selects speech frame 1102 with a mouse-pointer and inputs a speech through the keyboard. The input is displayed in speech frame 1102 and also transmitted to server 102.

Personal mixing section 302 checks whether or not it receives the speech from information terminal device 101 (step S903), and if it does not receive the speech, return to step S306. If the speech is received, mixing section 302 stores the speech into speech memory 701 as a reply to the plural messages displayed in output frames 1103 through 1107 (step S904.)

Personal mixing section 302 then checks whether or not it receives a request from device 101 about disconnection (step S311.) The procedures onward (steps S312 through S314) stay unchanged as those in the first embodiment.

As discussed above, in this second embodiment, some other users, who have deeper similarity of an interest and a topic, among other users are grouped by server 102 based on keywords included in the messages supplied as well as a personal profile including the user's interest. Then past speeches of the group are extracted, and the speeches are displayed on information terminal device 101 with a size of letters changed in response to the similarity depth. This mechanism allows a user to determine the similarity of user's topic through intuition, and to read the speeches of other users having deeper similarity.

In a conventional electronic bulletin board, a thread is fixedly assigned to just quote a reply to which messages at a writing timing, and a thread has a clear tree-structure. Threads are classified and managed based on the tree-structures. However, according to the second embodiment, a relation between messages can be presented to users with not only a simple quotation but also contents of the messages, so that only a speech of deeper similarity of interest and topic can be displayed when the thread is forwarded or backed up. This mechanism saves a user an operation of repelling non-interesting speeches.

Industrial Applicability

The present invention is useful for a communication support system to be used by plural users through an information communication network. The present invention allows each one of the users to change an object of his or her interest with ease, and to select on a real-time basis a counterpart who speaks to the user appropriately in response to the change.

**Claims**

1. A communication support method used by a plurality of users through an information communication network, the method comprising the steps of:

   a user sending a personal profile including the user's interest and a message on a topic the user wants to discuss at present to a communication server;
   the communication server receiving (S505) the personal profiles and the message sent from a plurality of the users; and

   **characterized by**

   the communication server analyzing (S507) the messages;
   the communication server (S509) calculating a depth of similarity of interests between each one of the users based on the analysis result and the personal profiles;
   the communication server weighting (S509) the messages of each one of the users based on the depth of similarity;
   the communication server synthesizing (S509) the weighted messages for producing an output signal; and
   the communication server transmitting (S510) the output signal to the users.

2. The communication support method according to claim 1, wherein the personal profiles includes at least one of information about the user, information about the user's interest, and environmental information of the user's terminal.

3. The communication support method according to claim 1 further comprising the steps of:

   the communication server generating (S507) a content profile by extracting a keyword indicating a present interest by analyzing the message; and

   wherein the step (S509) of the communication server calculating a depth of similarity of interests is based on the personal profile and the content profile.

4. The communication support method according to any preceding claim, wherein each message is formed of at least one of voice and text.

5. The communication support method according to claim 4, wherein the step (S509) of weighting the message comprises varying at least one of a sound volume, a sound quality, a size of text characters, a color of text characters and a typeface of text characters.

6. A communication server (102) accessed by a plurality of users through an information communication network, the communication server comprising:

means (116) for receiving a personal profile including an interest of a user, and a message on a topic the user wants to discuss at present, transmitted by the user; and

**characterized by**:

means (110) for analyzing the message;
means (302) for calculating a depth of similarity of present interest based on the analysis and the personal profile;
means (302) for weighting the messages based on the depth of similarity of the present interest;
means (302) for synthesizing the weighted messages for producing an output signal; and
means (301) for transmitting the output signal to the users.

7. The communication server according to claim 6, wherein the analyzing means (110) is configured to generate a content profile by extracting a keyword indicating a present interest, and
wherein the calculating means (302) is configured to calculate a depth of similarity of interests based on the personal profile and the content profile.

8. The communication server according to claim 6,
wherein each message is formed of at least one of voice and text.

9. The communication server according to claim 6,
wherein the weighting means (302) comprises means for varying at least one of a sound volume, a sound quality, a size of text characters, a color of text characters and a typeface of text characters.

**Patentansprüche**

1. Kommunikationsunterstützungsverfahren, das von mehreren Teilnehmern über ein Informationsübertragungsnetzwerk verwendet wird, mit den folgenden Schritten:

ein Teilnehmer sendet ein persönliches Profil mit dem Interesse des Teilnehmers sowie eine Nachricht zu einem Thema, das der Teilnehmer gerade erörtern möchte, an einen Kommunikationsserver; und
der Kommunikationsserver empfängt (S505) die persönlichen Profile und die Nachricht, die von mehreren Teilnehmern gesendet werden,

**dadurch gekennzeichnet, dass**

der Kommunikationsserver die Nachrichten analysiert (S507),
der Kommunikationsserver eine Tiefe der Ähnlichkeit von Interessen zwischen jedem der Teilnehmer aufgrund des Analysenergebnisses und der persönlichen Profile berechnet (S509),
der Kommunikationsserver die Nachrichten jedes der Teilnehmer aufgrund der Tiefe der Ähnlichkeit bewertet (S509),
der Kommunikationsserver die bewerteten Nachrichten zum Erzeugen eines Ausgangssignals synthetisiert (S509) und
der Kommunikationsserver das Ausgangssignal an die Teilnehmer sendet (S510).

2. Kommunikationsunterstützungsverfahren nach Anspruch 1, **dadurch gekennzeichnet, dass** die persönlichen Profile Informationen über den Teilnehmer und/oder Informationen über das Interesse des Teilnehmers und/oder Informationen über die Umgebung des Endgeräts des Teilnehmers enthalten.

3. Kommunikationsunterstützungsverfahren nach Anspruch 1, das weiterhin den Schritt aufweist, dass der Kommunikationsserver ein Inhaltsprofil durch Extrahieren eines Schlüsselworts, das ein aktuelles Interesse angibt, durch Analysieren der Nachricht erzeugt (S507), wobei der Schritt (S509), dass der Kommunikationsserver eine Tiefe der Ähnlichkeit von Interessen berechnet, auf dem persönlichen Profil und dem Inhaltsprofil beruht.

4. Kommunikationsunterstützungsverfahren nach einem vorhergehenden Anspruch, **dadurch gekennzeichnet, dass** jede Nachricht aus Sprache und/oder Text besteht.

5. Kommunikationsunterstützungsverfahren nach Anspruch 4, **dadurch gekennzeichnet, dass** der Schritt (S509) des Bewertens der Nachricht das Ändern einer Lautstärke, einer Tonqualität, einer Größe von Textzeichen, einer Farbe von Textzeichen und/oder einer Schriftart von Textzeichen umfasst.

6. Kommunikationsserver (102), auf den von mehreren Teilnehmern über ein Informationsübertragungsnetzwerk zugegriffen wird, mit:

   Mitteln (116) zum Empfangen eines persönlichen Profils mit einem Interesse eines Teilnehmers sowie einer Nachricht zu einem Thema, das der Teilnehmer gerade erörtern möchte, die von dem Teilnehmer gesendet werden,
   **gekennzeichnet durch**:

   Mittel (110) zum Analysieren der Nachricht,
   Mittel (302) zum Berechnen einer Tiefe der Ähnlichkeit des aktuellen Interesses aufgrund der Analyse und des persönlichen Profils,
   Mittel (302) zum Bewerten der Nachrichten aufgrund der Tiefe der Ähnlichkeit des aktuellen Interesses,
   Mittel (302) zum Synthetisieren der bewerteten Nachrichten zum Erzeugen eines Ausgangssignals und
   Mittel (301) zum Senden des Ausgangssignals an die Teilnehmer.

7. Kommunikationsserver nach Anspruch 6, **dadurch gekennzeichnet, dass**

   die Analysemittel (110) so konfiguriert sind, dass sie ein Inhaltsprofil durch Extrahieren eines Schlüsselworts, das ein aktuelles Interesse angibt, erzeugen, und
   die Berechnungsmittel (302) so konfiguriert sind, dass sie eine Tiefe der Ähnlichkeit von Interessen aufgrund des persönlichen Profils und des Inhaltsprofils berechnen.

8. Kommunikationsserver nach Anspruch 6, **dadurch gekennzeichnet, dass** jede Nachricht aus Sprache und/oder Text besteht.

9. Kommunikationsserver nach Anspruch 6, **dadurch gekennzeichnet, dass** die Bewertungsmittel (302) Mittel zum Ändern einer Lautstärke, einer Tonqualität, einer Größe von Textzeichen, einer Farbe von Textzeichen und/oder einer Schriftart von Textzeichen aufweisen.

**Revendications**

1. Procédé de support de communication utilisé par une pluralité d'utilisateurs sur un réseau de communication d'informations, le procédé comprenant les étapes :

   un utilisateur envoyant un profil personnel comprenant l'intérêt de l'utilisateur et un message sur un sujet sur lequel l'utilisateur souhaite discuter à présent à un serveur de communication,
   le serveur de communication recevant (S505) les profils personnels et les messages envoyés depuis une pluralité d'utilisateurs, et

   **caractérisé par**

   le serveur de communication analysant (S507) les messages,
   le serveur de communication (S509) calculant une profondeur de similarité des intérêts entre chacun des utilisateurs sur la base du résultat d'analyse et des profils personnels,
   le serveur de communication pondérant (S509) les messages de chacun des utilisateurs sur la base de la profondeur de similarité,

le serveur de communication synthétisant (S509) les messages pondérés pour produire un signal de sortie, et

le serveur de communication transmettant (S510) le signal de sortie aux utilisateurs.

2. Procédé de support de communication selon la revendication 1, dans lequel les profils personnels comprennent au moins des informations parmi les informations concernant l'utilisateur, les informations concernant l'intérêt de l'utilisateur et les informations d'environnement du terminal de l'utilisateur.

3. Procédé de support de communication selon la revendication 1, comprenant en outre les étapes suivantes:

le serveur de communication générant (S507) un profil de contenu en extrayant un mot de passe indiquant un intérêt actuel par l'analyse du message, et

où l'étape (S509) du serveur de communication calculant une profondeur de similarité des intérêts est fondée sur le profil personnel et le profil de contenu.

4. Procédé de support de communication selon l'une quelconque des revendications précédentes, dans lequel chaque message est constitué d'au moins un élément entre la voix et du texte.

5. Procédé de support de communication selon la revendication 4, dans lequel l'étape (S509) de pondération du message comprend la modification d'au moins un élément parmi un volume sonore, une qualité sonore, une taille de caractères de texte, une couleur de caractères de texte et une fonte de caractères de texte.

6. Serveur de communication (102) faisant l'objet d'un accès par une pluralité d'utilisateurs sur un réseau de communication d'informations, le serveur de communication comprenant :

un moyen (116) destiné à recevoir un profil personnel comprenant un intérêt d'un utilisateur et un message sur un sujet dont l'utilisateur souhaite discuter à présent, transmis par l'utilisateur, et

**caractérisé par** :

un moyen (110) destiné à analyser le message,

un moyen (302) destiné à calculer une profondeur de similarité du présent intérêt sur la base de l'analyse et du profil personnel,

un moyen (302) destiné à pondérer les messages sur la base de la profondeur de similarité du présent intérêt,

un moyen (302) destiné à synthétiser les messages pondérés pour produire un signal de sortie, et

un moyen (301) destiné à transmettre le signal de sortie aux utilisateurs.

7. Serveur de communication selon la revendication 6, dans lequel le moyen d'analyse (110) est configuré pour générer un profil de contenu en extrayant un mot de passe indiquant un présent intérêt, et

où le moyen de calcul (302) est configuré pour calculer une profondeur de similarité des intérêts sur la base du profil personnel et du profil de contenu.

8. Serveur de communication selon la revendication 6, dans lequel chaque message est constitué d'au moins un élément entre la voix et du texte.

9. Serveur de communication selon la revendication 6, dans lequel le moyen de pondération (302) comprend un moyen destiné à modifier au moins un élément parmi un volume sonore, une qualité sonore, une taille de caractères de texte, une couleur de caractères de texte et une fonte de caractères de texte.

EP 1 443 408 B1

Fig.1

Fig.2

EP 1 443 408 B1

EP 1 443 408 B1

## Fig.3

## Fig.4A

```
struct  keyword  {
        char    word[10];        /*    keyword                */
        int     positive;        /*    affirmation number     */
        int     negative;        /*    negation numbr         */
        } ;                      /*    structure of keyword   */


struct   person {
        keyword    kw1;          /*    keyword #1      */
        keyword    kw2;          /*    keyword #2      */
        keyword    kw3;          /*    keyword #3      */
                .
                .
                .

        keyword    kwN;          /*    keyword #N      */
        };
```

## Fig.4B

```
struct   contents {
        int     user_id;         /*    self user ID           */
        char    c_keyword[10];   /*    interested keyword     */
        };
```

Fig.5

```
                    ┌─────────────┐
                    │    Start    │
                    └──────┬──────┘
                           │              ╱ S501
          ┌────────────────▼────────────────┐
          │         A user accesses          │
          └────────────────┬────────────────┘
                           │              ╱ S502
          ┌────────────────▼────────────────┐
          │        authorize the user        │
          └────────────────┬────────────────┘
                           │              ╱ S503
     N              ◇──────▼──────◇
  ┌──────────────── ◇   permit ?   ◇
  │                 ◇──────┬──────◇
  │                        │ Y            ╱ S504
  │        ┌───────────────▼───────────────┐
  │        │ connect interface to personal │
  │        │        mixing section         │
  │        └───────────────┬───────────────┘
  │  ╱ S505                │
  │        ┌───────────────▼───────────────┐
  │        │ personal mixing section       │
  │        │ receives the personal profile │
  │        └───────────────┬───────────────┘
  │  ╱ S506                │
  │        ┌───────────────▼───────────────┐
  │        │ personal mixing section       │
  │        │ receives the message          │
  │        │ from user                     │
  │        └───────────────┬───────────────┘
  │  ╱ S507                │
  │        ┌───────────────▼───────────────┐
  │        │ personal mixing section       │
  │        │ produces a content profile    │
  │        │ based on the message, and     │
  │        │ retains the personal profile  │
  │        │ and the content profile in    │
  │        │ its inner memory              │
  │        └───────────────────────────────┘
```

**S508** Prodece PCV signal and send it to other personal mixing sections

**S509** produce an output signal based on the personal profile, content profile in the inner memory and PCV signal sent from other personal mixing sections

**S510** send the output signal via I/F

**S511** request to disconnect ?   N

**S512** release personal mixing section

**S513** calculate a charging fee and transmits to the information terminal device

**S514** determinant section receives the user confirmation and executes payment to financial organization

End

EP 1 443 408 B1

## Fig.6A

| | affirmation number | negation number |
|---|---|---|
| keyword #1 | $A_1$ | $a_1$ |
| keyword #2 | $A_2$ | $a_2$ |
| keyword #3 | $A_3$ | $a_3$ |
| keyword #4 | $A_4$ | $a_4$ |

## Fig.6B

| | affirmation number | negation number |
|---|---|---|
| keyword #3 | $B_3$ | $b_3$ |
| keyword #5 | $B_5$ | $b_5$ |
| keyword #1 | $B_1$ | $b_1$ |
| keyword #4 | $B_4$ | $b_4$ |

**Fig.7**

Information terminal device — 101

Information terminal device — 101

Information terminal device — 101

Financial organization — 103

104

102

Fee calculating section — 114

701

Interface section — 116

Connection exchange section — 110

Mixing section — 111

User support section — 112

User managing section — 113

Determinant section — 115

EP 1 443 408 B1

Fig.8

EP 1 443 408 B1

## Fig. 9

```
                    ┌──────────┐
                    │  Start   │
                    └────┬─────┘
                         │           S501
      ┌──────────────────▼──────────────────┐
      │            A user accesses           │
      └──────────────────┬──────────────────┘
                         │           S502
           ┌─────────────▼────────────┐
           │      authorize the user  │
           └─────────────┬────────────┘
                         │           S503
    N          ◇─────────▼─────────◇
   ◄───────────      permit ?       
               ◇───────────────────◇
                         │ Y         S504
      ┌──────────────────▼──────────────────┐
      │ connect interface to personal mixing section │
      └──────────────────┬──────────────────┘
              S505        │
      ┌──────────────────▼──────────────────┐
      │ personal mixing section receives the personal profile │
      └──────────────────┬──────────────────┘
              S506        │
      ┌──────────────────▼──────────────────┐
      │ personal mixing section receives the message │
      │                from user             │
      └──────────────────┬──────────────────┘
              S507        │
      ┌──────────────────▼──────────────────┐
      │ personal mixing section produces a content profile │
      │ based on the message, and retains the personal profile │
      │  and the content profile in its inner memory │
      └──────────────────┬──────────────────┘
              S901        │
      ┌──────────────────▼──────────────────┐
      │ store the content profile, the personal profile of this │
      │  user, and the text data into speech memory │
      └──────────────────┬──────────────────┘
```

```
                         S902
      ┌──────────────────────────────────────┐
      │ personal mixing section produces an output signal │
      │ based on the personal profile in the inner memory and │
      │    PCV signal in the speech memoriy  │
      └──────────────────┬──────────────────┘
                         │          S510
           ┌─────────────▼────────────┐
           │   send the output signal via I/F │
           └─────────────┬────────────┘
                         │          S903  N
              ◇──────────▼──────────◇ ───────►
                   receives speech ?
              ◇─────────────────────◇
                         │ Y        S904
      ┌──────────────────▼──────────────────┐
      │    stores the speech into speech memory │
      └──────────────────┬──────────────────┘
                         │          S511
              ◇──────────▼──────────◇      N
                 request to disconnect ? ───────
              ◇─────────────────────◇
                         │ Y        S512
      ┌──────────────────▼──────────────────┐
      │       release personal mixing section │
      └──────────────────┬──────────────────┘
                         │          S513
      ┌──────────────────▼──────────────────┐
      │ calculate a charging fee and transmits to │
      │     the information terminal device  │
      └──────────────────┬──────────────────┘
                         │          S514
      ┌──────────────────▼──────────────────┐
      │ determinant section receives the user confirmation │
      │ and executes payment to financial organization │
      └──────────────────┬──────────────────┘
                         │
                    ┌────▼─────┐
                    │   End    │
                    └──────────┘
```

EP 1 443 408 B1

# Fig.10

THREAD α -2

THREAD α -1

THREAD β

MESSAGE a

MESSAGE C

NEW

MESSAGE b

MESSAGE X

THREAD γ

OLD

THREAD α

23

## Fig.11A

1103 — 1st output frame
1104 — 2nd output frame
1105 — 3rd output frame
1106 — 4th output frame
1107 — 5th output frame
1102 — Speech frame
1101 — Input frame

## Fig.11B

Output frame
1110 — Message C
1109 — Message B
1108 — Message A
1111 — forward
1112 — backing-up
1102 — Speech frame
1101 — Input frame

Fig.12

List of Reference Marks in the Drawings

| | |
|---|---|
| 101 | information terminal device |
| 102 | communication server |
| 103 | financial organization |
| 104 | information communication network |
| 110 | connection exchange section |
| 111 | mixing section |
| 112 | user support section |
| 113 | user managing section |
| 114 | fee calculating section |
| 115 | determinant section |
| 116 | interface section |
| 201 | microphone |
| 202 | input means |
| 203 | speaker |
| 204 | personal profile producing means |
| 205 | personal profile memory |
| 206 | transmitter |
| 207 | receiver |
| 208 | central processing unit |
| 301 | interface |
| 302 | personal mixing section |
| 701 | speech memory |
| 1200 | server |
| 1211 | communication controller |
| 1212 | input-output section |
| 1213 | relation-depth calculator |
| 1214 | placement calculator |
| 1215 | on-screen display |
| 1216 | personal information management database |
| 1217 | personal characteristics information database |
| 1218 | rapport depth database |
| 1219 | code-word database |
| 1220 | network |
| 1230 | client terminal |
| 1231 | browser |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000132509 A
- JP H09288683 A
- US 6088435 A
- WO 0072560 A